# EUROPEAN PATENT APPLICATION

(11) **EP 4 575 242 A2**
(43) Date of publication of application: **25.06.2025**
(21) Application number: 25174274.8
(22) Date of filing: 17.12.2021
(51) Int. Cl.: F16B 19/10

(54) **TWO-PIECE BLIND FASTENER AND INSTALLATION TOOL**

(30) Priority: 17.12.2020 US 202063126799 P
(62) Divisional of application: 21215522.0
(71) Applicant: SPS Technologies, LLC, Jenkintown, PA 19046 (US)
(72) Inventor: COBZARU, Cristinel, Murrieta, CA 92563 (US); HOFFARTH, Brian, Santa Ana, CA 92705 (US)
(74) Representative: Germain Maureau

(57) **Abstract**

A tool (510) for installing a blind fastener (10) including a bolt (14) and a nut (18) includes a base (534), collet (710), socket assembly (714), drive body (718), and mode clutch. The collet is coupled to the base and disposed about an axis (530). The collet can selectively engage a portion of the nut. The socket assembly includes a socket housing (610) and a plurality of rollers (614). The socket housing is rotatable relative to the collet and defines a bore disposed about the axis. The rollers are spaced circumferentially about the axis. A surface of each roller can engage a cylindrical portion of the bolt within the bore to rotate the bolt about the axis. The drive body is coupled to the socket housing and configured to rotate the socket housing about the axis relative to the base. The mode clutch is configured to selectively couple the socket housing with the collet for common rotation about the axis.

## Description

### FIELD

The present disclosure relates generally to fasteners and more particularly to blind fasteners having a core bolt and a nut around the core bolt for connecting panels from one side of the panels.

### BACKGROUND

The statements in this section merely provide background information related to the present disclosure and may not constitute prior art.

A blind fastener is typically used to secure multiple panels together and to be installed from one side (i.e., a front side) of the panels. The blind fastener may include a core bolt and a sleeve surrounding the core bolt, which are inserted into a hole of the panels. A portion of the sleeve adjacent to a rear side of the panel may be deformed during installation of the fastener. The deformed portion of the sleeve provides a bearing surface to induce preload in the fastener such that the panels can be clamped together.

After the deformed portion of the sleeve is formed, the core bolt may be rotated to provide a preload to the fastener. When the fastener is completely installed, a front portion of the core bolt may break off. The break-off point of the typical core bolt cannot be controlled and rotation of the nut relative to the bolt typically needs to be controlled. In some circumstances it is advantageous to have the fully installed fastener be flush with panels for aesthetics and aerodynamic purposes. Typical fasteners need to be prepared for painting by post-installation grinding to be made flush with the panels when the break-off point is located outside the countersunk head of the sleeve.

It can be difficult to control rotation of both the bolt and the nut, while also ensuring a flush finished product, maximizing the speed of installation, and reducing cost per fastener. Furthermore, variations in grip length (i.e., the combined thickness of the panels at the fastener) can occur based on tolerances or design criteria. Accordingly, it is advantageous for the blind fastener to be able to adapt to variations in grip length without sacrificing strength of the joint. Moreover, the typical fastener does not include a torque control feature. When excessive torque is applied to the fastener, the sleeve of the fastener may flare out to form a tulip configuration, resulting in a defective installation.

These issues related to the installation of blind fasteners are addressed by the present disclosure.

### SUMMARY

In one form, a tool for installing a blind fastener including a bolt and a nut includes a base, a collet, a socket assembly, a drive body, and a mode clutch. The collet is coupled to the base and disposed about an axis. The collet is configured to selectively engage a tool engagement portion of the nut. The socket assembly includes a socket housing and a plurality of rollers. The socket housing is rotatable relative to the collet and defines a bore disposed about the axis. The rollers are spaced circumferentially about the axis. A surface of each roller is configured to engage a cylindrical tool engagement portion of the bolt within the bore to rotate the bolt about the axis. The drive body is coupled to the socket housing and configured to rotate the socket housing about the axis relative to the base. The mode clutch is configured to selectively couple the socket housing with the collet for common rotation about the axis. In a variety of alternate forms: the rollers are cylindrical bodies oriented parallel to the axis; the tool further includes an outer sleeve disposed about the collet, wherein the collet includes a plurality of prongs extending radially inward and configured to engage the tool engagement portion of the nut, the outer sleeve being movable between a first sleeve position and a second sleeve position, wherein when the outer sleeve is in the first sleeve position, the prongs are further radially inward than when in the second sleeve position; the outer sleeve is biased toward the first radial position; the collet includes a collet sleeve, the prongs extending axially from the collet sleeve and the outer sleeve being disposed about the collet sleeve, wherein one of the collet sleeve and the outer sleeve defines a cam surface and the other one of the collet sleeve and the outer sleeve defines a follower, the cam surface extending at an angle relative to the axis; the mode clutch includes an input member coupled to the drive member for common rotation about the axis and an output member coupled to the collet for common rotation about the axis, the output member being disposed about the input member and axially movable relative to the input member between a first mode clutch position and a second mode clutch position, wherein in the first mode clutch position, the input member is engaged with the output member for common rotation about the axis, and when in the second mode clutch position, the input member is rotatable relative to the output member; the output member includes a stop member and the base includes a mating stop member, wherein when in the second mode clutch position, the stop member engages the mating stop member to inhibit rotation of the output member relative to the base, and when in the first mode clutch position, the stop member and mating stop member are disengaged to permit rotation of the output member relative to the base; the output member is biased toward the first mode clutch position; the tool further includes an ejector configured to selectively eject the bolt from the socket housing.

According to another form, a blind fastener for connecting a plurality of workpieces includes a bolt and a nut. The bolt includes a shaft, a bolt head, and a lug. The bolt head is disposed between the shaft and the lug and extends radially outward from the shaft. An end of the shaft opposite the bolt head defines external threads. The lug includes a first tool engagement portion and a first frangible portion that frangibly couples the lug to the bolt head. The first tool engagement portion defines a cylindrical outer surface configured to be engaged by a tool. A nut includes a sleeve, a nut head, and a handling member. The sleeve defines a central bore configured to receive the shaft and defines internal threads configured to mate with the external threads. The nut head is disposed between the handling member and the sleeve. The nut head extends radially outward from the sleeve and defines a recess configured to receive the bolt head. The handling member is configured to surround at least a portion of the lug. The handling member includes a second frangible portion and a second tool engagement portion. The second frangible portion frangibly couples the second tool engagement portion to the nut head. According to a variety of alternate forms: an end surface of the bolt head is flush with or recessed from an end surface of the nut head when the bolt is fully threaded into the nut; the first frangible portion is configured to break off from the bolt head such that an end surface of the bolt head is flush with or recessed from a front surface of the plurality of workpieces, and the second frangible portion is configured to break off from the nut head such that an end surface of the nut head is flush with or recessed from the front surface; the lug tapers radially inward from the cylindrical outer surface to a terminal end portion of the bolt; the handling member tapers radially inward from the second tool engagement portion to a terminal end portion of the nut; the second frangible portion is entirely radially inward of an outermost perimeter of the nut head; the handling member defines a bore having a diameter equal to an outermost diameter of the recess; a radially outermost surface of the lug is disposed radially outward of a bore defined by the handling member, the first frangible portion extending through the bore; the handling member is entirely radially outward of the first tool engagement portion; the lug tapers radially inward from the cylindrical outer surface to the first frangible portion; the blind fastener consists of two pieces when in a pre-installed condition, the bolt being a first one of the two pieces and the nut being a second one of the two pieces; the second frangible portion defines a break-neck that extends around a full circumference of the nut; the first frangible portion includes a break-neck that extends around a full circumference of the bolt; the bolt is an aluminum material and the sleeve is a titanium material; the bolt is a 6-4 titanium alloy material and the sleeve is an unalloyed commercially pure titanium material.

Further areas of applicability will become apparent from the description provided herein. It should be understood that the description and specific examples are intended for purposes of illustration only and are not intended to limit the scope of the present disclosure.

### DRAWINGS

In order that the disclosure may be well understood, there will now be described various forms thereof, given by way of example, reference being made to the accompanying drawings, in which:
FIG. 1 is an exploded perspective view of a blind fastener in accordance with the teachings of the present disclosure, illustrating a bolt and a nut of the blind fastener;
FIG. 2 is a perspective view of the blind fastener of FIG. 1;
FIG. 3 is a cross-sectional view of the blind fastener of FIG. 1, illustrating the bolt and nut in a pre-installed condition;
FIG. 4 is a cross-sectional view of the blind fastener of FIG. 1 illustrated in an installed condition in accordance with the teachings of the present disclosure;
FIG. 5 is a perspective view of a tool for installing a blind fastener in accordance with the teachings of the present disclosure;
FIG. 6 is a partial cross-sectional view of a nose of the tool of FIG. 5;
FIG. 7 is an exploded perspective view of the nose of FIG. 6;
FIG. 8 is a cross-sectional view of a collet driveline of the nose of FIG. 5;
FIG. 9 is a cross-sectional view of a bolt driveline of the nose of FIG. 6;
FIG. 10 is a perspective view of a collet of the collet driveline of FIG. 8;
FIG. 11 is an exploded perspective view of a mode clutch of the tool of FIG. 6;
FIG. 12 is partial cross-sectional perspective view of a portion of the tool of FIG. 6;
FIG. 13 is a partial cross-sectional perspective view of a portion of the collet driveline of FIG. 8;
FIG. 14 is a cross-sectional view of the nose of the tool of FIG. 6, illustrating the tool in a first operating mode and engaging the blind fastener of FIG. 1 in the preinstalled condition;
FIG. 15 is a cross-sectional view similar to FIG. 24, illustrating the tool in a second operating mode;
FIG. 16 is an exploded perspective view of a tool of a second configuration for installing a blind fastener in accordance with the teachings of the present disclosure;
FIG. 17 is a cross-sectional view of a portion of the tool of FIG. 16;
FIG. 18 is a perspective view of a tool of a third configuration for installing a blind fastener in accordance with the teachings of the present disclosure, illustrating the tool in a first position;
FIG. 19 is a perspective cross-sectional view of a portion of the tool of FIG. 18;
FIG. 20 is a cross-sectional view of a portion of the tool of FIG. 18, taken along line 20-20 shown in FIG. 19;
FIG. 21 is a cross-sectional view of a portion of the tool of FIG. 18, taken along line 21-21 shown in FIG. 19;
FIG. 22 is an exploded perspective view of a portion of the tool of FIG. 18;
FIG. 23 is a perspective view of the tool of FIG. 18, illustrated in a second position in accordance with the teachings of the present disclosure with the blind fastener of FIG. 1 in the preinstalled condition;
FIG. 24 is a cross-sectional view of a portion of the tool of FIG. 18 illustrated in a third position and engaged with the blind fastener of FIG. 1; and
FIG. 25 is a side view of a portion of the tool of FIG. 18 in the third position.

The drawings described herein are for illustration purposes only and are not intended to limit the scope of the present disclosure in any way.

### DETAILED DESCRIPTION

The following description is merely exemplary in nature and is not intended to limit the present disclosure, application, or uses. It should be understood that throughout the drawings, corresponding reference numerals indicate like or corresponding parts and features.

### Fastener Assembly

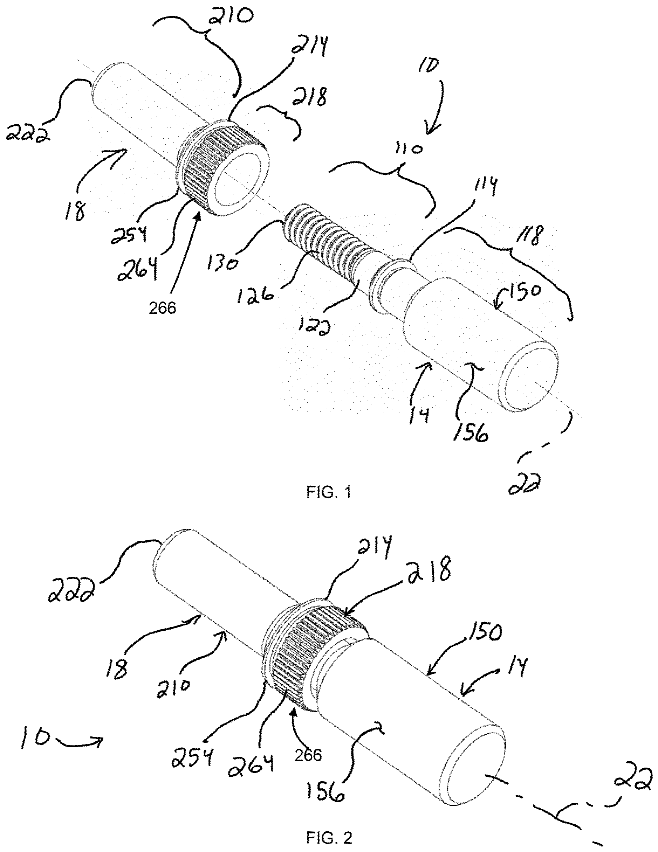

Referring to FIGS. 1-3, a blind fastener 10 includes a bolt 14 and nut 18 that are configured to be matingly fitted together when positioned coaxially along a central axis 22. In the example provided, the bolt 14 is a single, integral piece of material and the nut 18 is a separate, single, integral piece of material. The bolt 14 and nut 18 can be formed from any suitable type of material such as a metal or alloy material for example. The bolt 14 can be formed of the same material as the nut 18 or can be a different suitable material. The blind fastener 10 can be similar to the blind fastener of U.S. Patent Application No. 16/201,775 (U.S. Pub. No. 2019/0162217, the entire disclosure of which is incorporated herein by reference) and/or International Application No. PCT/US2020/047946 (filed August 26, 2020, the entire disclosure of which is incorporated herein by reference) except as otherwise shown or described herein.

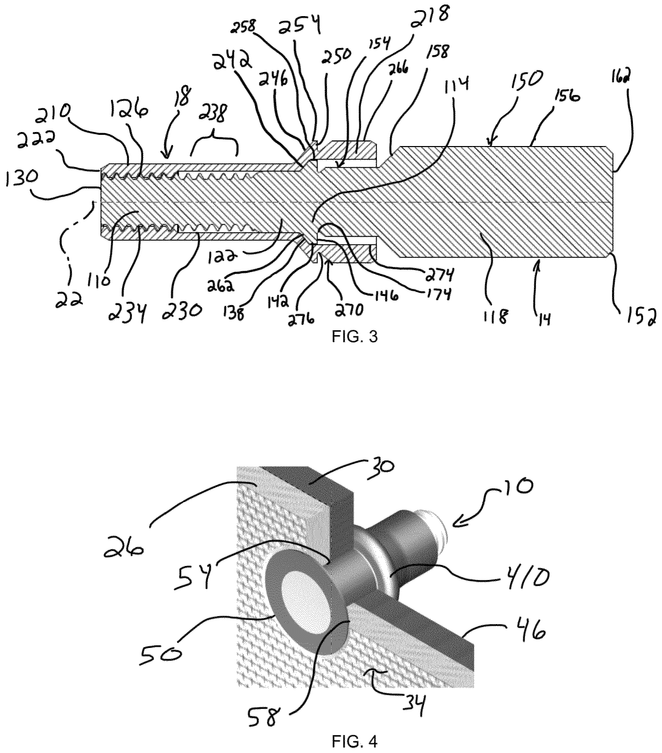

With additional reference to FIG. 4, the blind fastener 10 secures a first workpiece 26 to a second workpiece 30. In an alternative form, not specifically shown, more than two workpieces can be secured together by the blind fastener 10. In the example provided, the workpieces 26, 30 are plates or panels formed of any suitable material, such as metal (e.g., aluminum), carbon fiber composite or other suitable material for a given application.

The first workpiece 26 and the second workpiece 30 each define apertures that cooperate when aligned to form an aperture 50 through a front surface 34 of the first workpiece 26 and through a back surface 46 of the second workpiece 30. The aperture 50 can be countersunk or counter bored from the first front surface 34. In the example provided, the aperture 50 is counter sunk such that it includes a cylindrical inner bore 54 and a contact surface 58 that extends axially at an angle between the inner bore 54 and the first front surface 34.

Returning to FIGS. 1-3, the bolt 14 includes a shaft 110, a bolt head 114, and a lug 118 that are disposed about the axis 22. The shaft 110 is generally cylindrical and includes a stem 122 and a threaded portion that defines external threads 126. The external threads 126 begin at one terminal end 130 of the bolt 14. The stem 122 is disposed axially between the threads 126 and the bolt head 114.

In one form, the stem 122 is a generally smooth cylinder with a diameter that is greater than or equal to the major diameter of the external threads 126. The external threads 126 extend axially along the shaft 110 until terminating adjacent to the stem 122, though other configurations can be used. In one alternative example, not shown, a sealant or a seal can be disposed between the termination of the external threads 126 and the stem 122 or can be disposed along the stem 122, to seal with the inner surface of the nut 18. The seal (not shown) is configured to inhibit passage of fluids, such as water, oil, fuel, etc. The seal (not shown) can be an elastomeric body, such as an O-ring for example.

The bolt head 114 is located at an end of the stem 122 that is opposite the external threads 126. The bolt head 114 extends radially outward of the stem 122.

Referring to FIG. 3, the bolt head 114 includes a clamp surface 138, a radially outermost perimeter 142, and a first end surface 146. The clamp surface 138 extends radially outward from the stem 122 at an angle such that the clamp surface 138 is generally conical in shape, though other configurations can be used. The perimeter 142 extends axially between the clamp surface 138 and the first end surface 146. In the example provided, the perimeter 142 is generally parallel with the axis 22, though other configurations can be used. The first end surface 146 faces axially away from the stem 122. In the example provided, the first end surface 146 is generally perpendicular to the axis 22, though other configurations can be used.

The lug 118 includes a first tool engagement portion 150 and a first frangible portion 154. In the example provided, the lug 118 can also include a rim 158 extending axially between the first tool engagement portion 150 and the first frangible portion 154. The first tool engagement portion 150 defines the other terminal end 162 of the bolt 14, opposite the external threads 126.

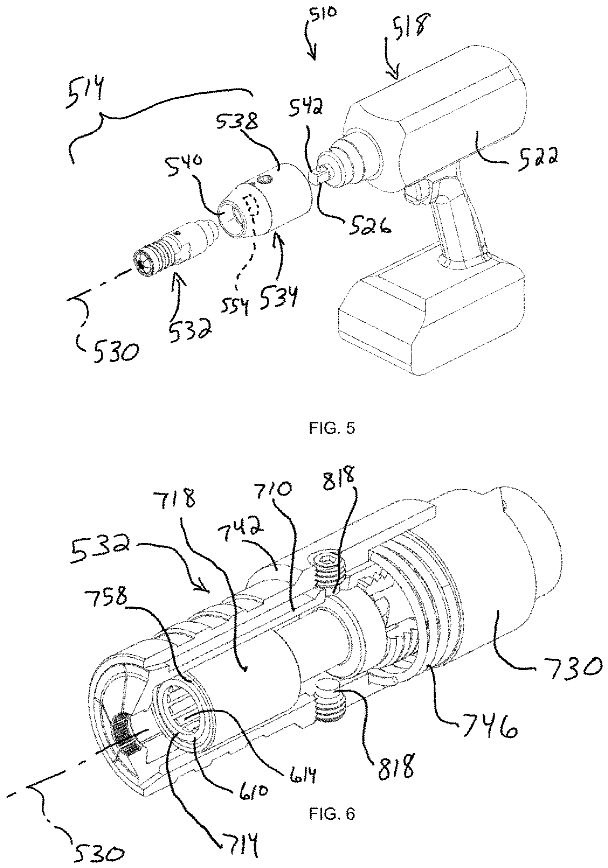

The first tool engagement portion 150 is configured to be engaged by a tool 510 (FIG. 5) to impart torque about the axis 22. In the example provided, the first tool engagement portion 150 has a cylindrical surface 156. In the example provided, the cylindrical surface 156 extends the entire length of the first tool engagement portion 150. In the example provided, the cylindrical surface 156 is a generally smooth surface, though other configurations can be used, such as a rough surface or a knurled surface for example. In the example provided, the first tool engagement portion is 150 devoid of flat tool engagement surfaces and has a constant diameter along its length from the rim 158 to the terminal end 162 with the exception of an optional annular chamfer 152 at the terminal end 162 that can guide the tool 510 (FIG. 5) onto the first tool engagement portion 150. As described in greater detail below, the tool 510 (FIG. 5) is configured to engage the cylindrical surface 156 of the first tool engagement portion 150

The rim 158 is axially between the first tool engagement portion 150 to the first frangible portion 154 and extends radially outward from the first frangible portion 154 to the first tool engagement portion 150. In the example provided, the rim 158 has a generally frustoconical shape that widens with increased distance from the first frangible portion 154.

The first frangible portion 154 frangibly couples the rim 158 to the bolt head 114. In the example provided, the outer surface 166 of the first frangible portion 154 is generally cylindrical in shape and has a diameter that is equal to or less than the outermost diameter of the perimeter 142 of the bolt head 114. The first frangible portion 154 narrows from the outer surface 166 to a break-neck 174 that joins the first end surface 146 of the bolt head 114 with the lug 118. In the example provided, the diameter of the break-neck 174 is also less than the diameter of the stem 122 and extends around a full circumference of the bolt 14.

Referring to FIGS. 1-3, the nut 18 in the example provided is formed from a single, integral piece of material and includes a sleeve 210, a nut head 214, and a handling member 218 disposed about the axis 22. The sleeve 210 is a generally cylindrical body. One end of the sleeve 210 defines a terminal end 222 of the nut opposite the nut head 214. The sleeve 210 is received in the inner bore 54 (FIG. 4) of the first and second workpieces 26, 30 (FIG. 4).

Referring to FIG. 3, the sleeve 210 defines a central bore 230 coaxial with the axis 22 and includes internal threads 234. The internal threads 234 are configured to threadably engage the external threads 126 of the bolt 14. The first bore 230 has a diameter that is slightly greater than the diameter of the stem 122 so that the shaft 110 can be rotatably received in the first bore 230.

Referring to FIG. 3, the sleeve 210 can include a ductile region 238 between internal threads 234 and the nut head 214. The ductile region has a hardness that is less than a hardness of the rest of the nut 18. In one form, the nut head 214, the region of the sleeve 210 that is surrounded by the first and second workpieces 26, 30, and the region of the sleeve 210 that includes the internal threads 234 has a first hardness value, while the ductile region 238 can have a significantly lower hardness value. This significantly lower hardness value can be achieved by band annealing the sleeve 210 for example.

The nut head 214 is located at an end of the sleeve 210 that is opposite the internal threads 234 and extends radially outward of the sleeve 210. The nut head 214 includes a recess 242, a clamp surface 246, and a second end surface 250. The clamp surface 246 extends radially outward from the sleeve 210 at an angle that forms a generally conical shape, though other configurations can be used. A perimeter 254 of the nut head 214 is defined by the junction of the clamp surface 246 and the second end surface 250. The second end surface 250 faces axially away from the sleeve 210 and can be generally perpendicular to the axis 22, though other configurations can be used.

The recess 242 is disposed concentrically about the axis 22 and configured to receive the bolt head 114. The recess 242 has an inner wall surface 258 and a contact surface 262. The contact surface 262 extends radially outward from the first bore 230 at an angle relative to the inner wall surface 258 to form a generally conical shaped recess. In the example provided, the inner wall surface 258 is generally cylindrical and extends axially between the contact surface 262 and the handling member 218. The inner wall surface 258 has a diameter that is greater than the diameter of the perimeter 142 of the bolt head 114 so that the bolt head 114 can be rotatably received in the recess 242.

The contact surface 262 of the nut head 214 is at an angle similar to the angle of the clamp surface 138 of the bolt head 114. The inner wall surface 258 of the nut head 214 meets the contact surface 262 at a depth from the second end surface 250 such that when the bolt head 114 is received in the recess 242 the first end surface 146 of the bolt head 114 is flush with or recessed from the second end surface 250 of the nut head 214.

The handling member 218 includes a second tool engagement portion 266 and a second frangible portion 270 disposed about the axis 22. The handling member 218 defines a second bore 274 coaxial with the axis 22 The second bore 274 surrounds at least a portion of the first frangible portion 154. In the example provided, the second bore 274 has a diameter less than the maximum diameter of the rim 158 of the lug 118, though other configurations can be used. In the example provided, the second bore 274 has the same diameter as the inner wall surface 258 of the nut head 214 such that the second bore 274 and inner wall surface 258 can be formed as a single bore.

The second tool engagement portion 266 is configured to be engaged by the tool 510 (FIG. 5) to impart torque on the handling member 218 about the axis 22. Referring to FIGS. 1 and 2, the second tool engagement portion 266 has a plurality of externally facing splines 264 and the tool 510 (FIG. 5) is configured to engage the splines 264 of the second tool engagement portion 266, though other shapes or configurations can be used, such as star, hex, or lobe shapes or other driving configurations. In the example provided, the second tool engagement portion 266 is entirely radially inward of the perimeter 254 of the nut head 214, though other configurations can be used.

Referring to FIG. 3, the second frangible portion 270 frangibly couples the second tool engagement portion 266 to the nut head 214. In the example provided, the inner surface of the second frangible portion 270 is defined by the second bore 274 and an outer surface of the second frangible portion 270 narrows from the second tool engagement portion 266 to define a break-neck 276. Thus, the handling member 218 has a minimum wall thickness about the axis 22 at a location where the second frangible portion 270 meets the nut head 214. In the example provided, the break-neck 276 extends around a full circumference of the nut 18.

In an alternative form, the handling member 218 can be a part that is formed separately from the rest of the nut 18 (i.e., the sleeve 210 and the nut head 214). In this alternative form, the handling member 218 can be attached to the nut head 214 such as by glue, adhesive, welding, or brazing for example. In this alternative form, the frangible portion 270 is formed by the glue, adhesive, weld, or braze. This alternative form may still narrow to a neck (similar to break-neck 276) at the frangible portion 270 or may not narrow depending on the strength of the glue, adhesive, weld, or braze.

### Installation

Referring generally to FIGS. 3 and 4, the bolt 14 and nut 18 are shown in a preinstalled position relative to each other. With the blind fastener 10 in the preinstalled position, the blind fastener 10 is inserted through the first and second workpieces 26, 30 until the second end surface 250 of the nut head 214 is flush with or recessed from the front surface 34. The sleeve 210 extends from the back surface 46.

In this position, the tool 510 (FIG. 5) can engage the first tool engagement portion 150 and the second tool engagement portion 266. The tool 510 (FIG. 5) is then operated in a first mode such that the tool 510 (FIG. 5) transmits torque to the bolt 14 in the tightening direction of the threads 126, 234, while the tool 510 (FIG. 5) also holds the nut 18 rotationally stationary relative to the work pieces 26, 30. The tool 510 inhibits the bolt 14 and nut 18 from moving axially away from the workpieces 26, 30.

The threads 126, 234 impart an axial force on the sleeve 210 to move the terminal end 222 of the sleeve 210 toward the work pieces 26, 30, causing the ductile region 238 of the sleeve 210 to deform radially outwards to form a bulb 410. The bulb 410 contacts the back surface 46 and can impart a force thereon that biases the second workpiece 30 toward the first workpiece 26. Thus, the first and second workpieces 26, 30 are clamped between the nut head 214 and the bulb 410.

Once the bulb 410 is formed, the bulb 410 and sleeve 210 can resist further deformation. Additional torque applied to the bolt 14 above a predetermined torque threshold value can then cause the first frangible portion 154 to break. More specifically, the lug 118 is rotated in the tightening direction while the nut 18 is held rotationally and axially stationary. The threads 126, 234 impart an axial force on the sleeve 210 until the shear strength of the break-neck 174 is exceeded. The break-neck 174 then shears, separating the lug 118 from the bolt head 114. The shearing of the break-neck 174 leaves the first end surface 146 of the bolt head 114 flush with or slightly recessed from the second end surface 250 of the nut head 214, as shown in FIG. 4.

The clamping force of the bulb 410 and the nut head 214 on the workpieces 26, 30 can resist rotation of the nut 18 relative to the workpieces 26, 30. The tool 510 then applies torque to the handling member 218 in an amount that exceeds a predetermined torque threshold value to cause the second frangible portion 270 to break. More specifically, the second frangible portion 270 shears at the break-neck 276, separating the handling member 218 from the nut head 214. The shearing of the second frangible portion 270 leaves the second end surface 250 of the nut head 214 flush with or recessed from the front surface 34 of the first workpiece 26, as shown in FIG. 4. In the example provided, since the rim 158 has a greater diameter than the second bore 274, the lug 118 cannot fall axially through the second bore 274. Thus, the lug 118 can be removed with the second handling member 218 by the tool 510 (FIG. 5).

Thus, as shown in FIG. 4, the blind fastener 10 can be easily installed and while being flush with the first workpiece 26 when in the fully installed position without the need for further machining or processing.

### Tool

Referring to FIG. 5 the tool 510 for installing a blind fastener such as the blind fastener 10 (FIGS. 1-4) is illustrated. The tool 510 and its operation can be similar to the tools of co-pending and commonly owned U.S. Patent Application No. 16/203,535 (U.S. Pub. No. 2019/0160520, the entire disclosure of which is incorporated herein by reference) and/or International Application No. PCT/US2020/047946 (filed August 26, 2020, the entire disclosure of which is incorporated herein by reference), except as otherwise shown or described herein. The tool 510 includes a nose 514 and a driver 518 drivingly coupled to the nose 514. In the example provided, the driver 518 is an electric hand-held nut-runner. In an alternative configuration, not shown, the driver 518 can be any suitable type of drive mechanism configured to drive the nose 514, such as a pneumatic drive mechanism or an end-effector of a robotic arm for example.

The driver 518 includes a housing 522 and a drive shaft 526. The drive shaft 526 is rotatable relative to the housing 522 about an axis 530 and receives input torque from a motor (not specifically shown) of the driver 518. The nose 514 includes a forward nose assembly 532 and a rear nose portion 534 (also referred to herein as a base). The rear nose portion 534 is non-rotatably coupled to the housing 522. The rear nose portion 534 can include a generally cylindrical body 538 that defines a bore 540 disposed about the axis 530 and configured to receive the drive shaft 526 therein.

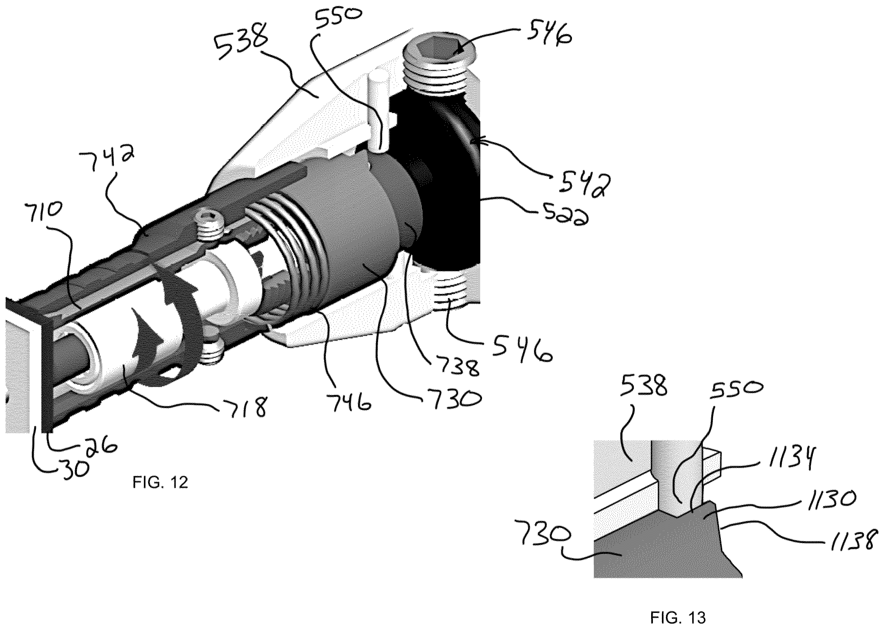

With additional reference to FIG. 12, the bore 540 of the rear nose portion 534 can also receive a cylindrical portion 542 of the housing 522 and the rear nose portion 534 can be non-rotatably coupled to the housing 522 by one or more set screws 546 that extend through the rear nose portion 534 and engage the cylindrical portion 542 of the housing 522, though other configurations can be used to fix the rear nose portion 534 to the housing 522. The rear nose portion 534 also includes one or more stop members 550. In the example provided, the stop members 550 are fixed to the cylindrical body 538 and extend radially inward within the bore 540, though other configurations can be used such as extending axially from the housing 522 for example.

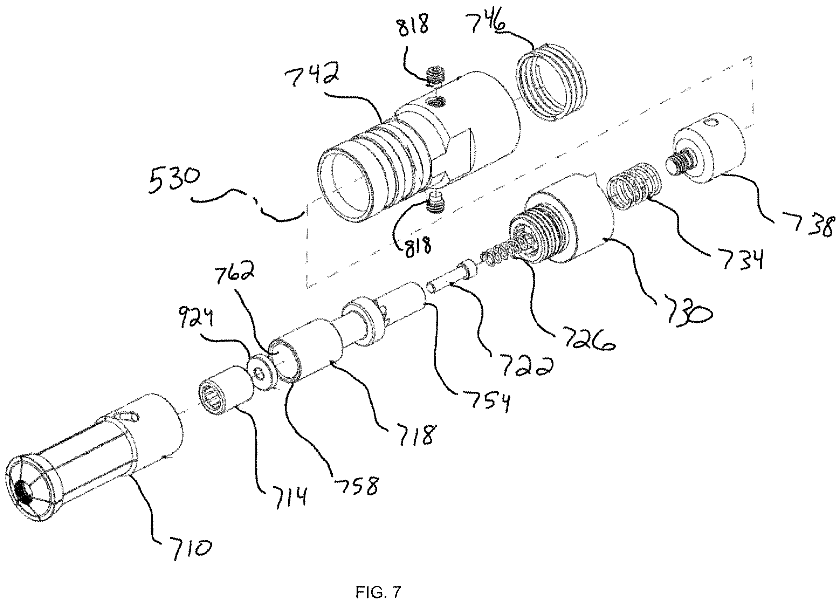

Referring to FIGS. 6 and 7, the forward nose assembly 532 includes a collet 710, a roller clutch or socket assembly 714, a drive member 718 (also referred to herein as a drive body), an ejector pin 722, a first spring 726, an annular body 730 (also referred to herein as an output member), a second spring 734, an input member 738, an outer sleeve 742, and a third spring 746. The input member 738 is coaxial with the axis 530 and coupled to the drive shaft 526 for common rotation. In the example provided, the end 542 (FIG. 5) of the drive shaft 526 has a predetermined shape (e.g., square or hex for example) that mates with a mating predetermined shaped cavity (not specifically shown) defined by the input member 738, though other configurations can be used.

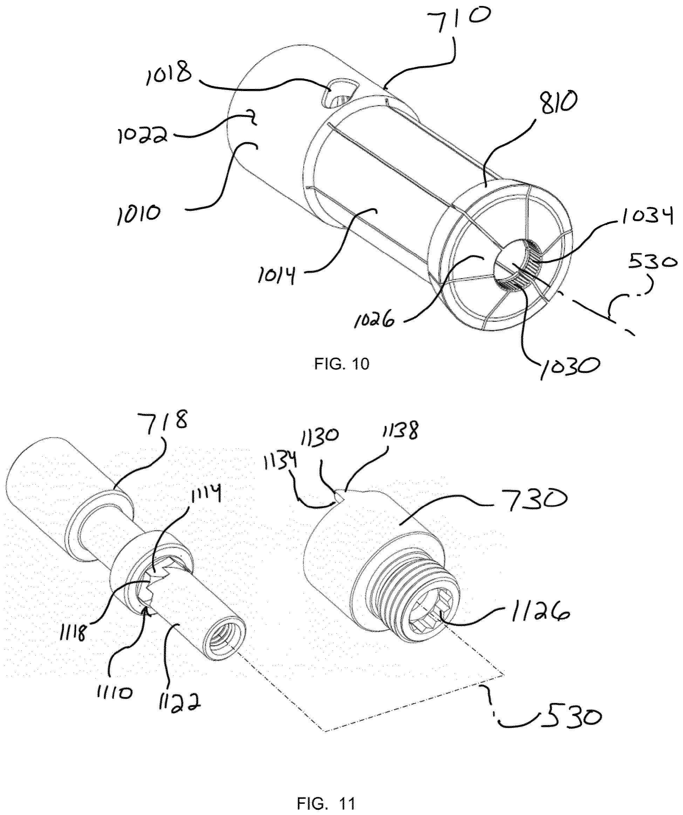

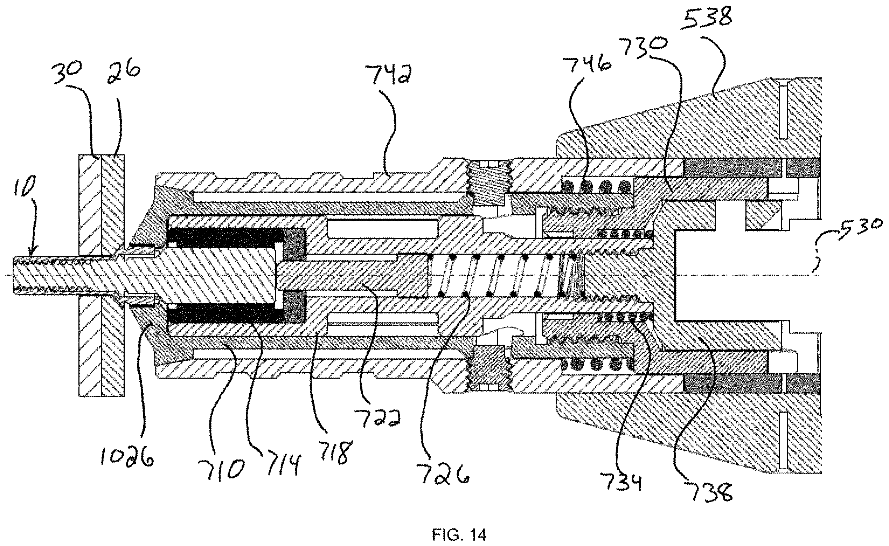

The drive member 718 is disposed about the axis 530 and a rearward end 754 of the drive member 718 is coupled to the input member 738 for common rotation about the axis 530. In the example provided, the input member 738 is threadably engaged with the drive member 718, though other configurations can be used. A forward end 758 of the drive member 718 defines a bore 762. Referring to FIG. 11, the drive member 718 also includes a mode clutch input 1110 disposed between opposite axial ends 754, 758. The mode clutch input 1110 includes a plurality of flat surfaces 1114 disposed about the axis 530. In the example provided, the flat surfaces 1114 form a generally hexagonal shape about the axis 530, though other configurations can be used. In the example provided, the mode clutch input 1110 also defines angular or helical lead-in ramps 1118 that angle proximate the forward side of each point of the hex shape (i.e., the junction of the flat surfaces 1114), downward toward a cylindrical surface 1122. These lead-in ramps 1118 can aid in rapid engagement of the mode clutch input 1110 with a mating socket or mode clutch output 1126 defined by a forward end of the annular body 730 when not perfectly rotationally aligned. In the example provided, the mode clutch output 1126 is a twelve-point star shape configured to mate with the hexagonal shape of the flat surfaces 1114, though other configurations can be used. Referring to FIG. 14, the second spring 734 can be disposed about the drive member 718 and can bias the annular body 730 forward relative to the drive member 718 into engagement with the mode clutch input 1110 to act as a mode clutch.

Referring to FIGS. 11-13, a plurality of stop members 1130 also extend axially from a rear end of the annular body 730. The stop members 1130 define a shoulder 1134 configured to engage the stop members 550 and act as a clutch. In the example provided, the stop members 1130 also include a ramp surface 1138 such that rotation of the annular body 730 in one direction can be inhibited by the shoulder 1134 engaging the stop member 550 while rotation of the annular body 730 in the opposite direction can be permitted by the ramp surface 1138 sliding along the stop member 550 and axially translating the annular body 730.

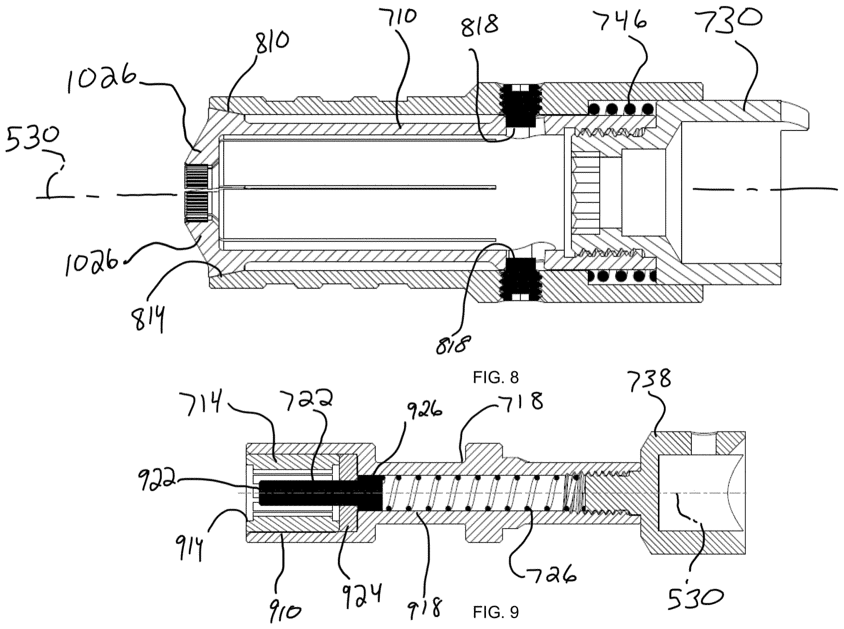

Referring to FIGS. 6 and 9, the socket assembly 714 includes a socket housing 610 and a plurality of rollers 614. The socket housing 610 is coupled to the drive member 718 for common rotation about the axis 530. In the example provided, the socket housing 610 is press fit into the bore 762 of the drive member 718, though other configurations can be used.

The socket housing 610 defines a bore 910 concentric with the axis 530. The rollers 614 are spaced circumferentially about the axis and coupled to the socket housing 610 for common rotation about the axis 530. A portion of each roller 614 extends into the bore 910 such that a rounded outer surface of each roller is configured to engage the cylindrical surface 156 (FIGS. 1-3) of the bolt 14 (FIGS. 1-3). Each roller is rotatable relative to the socket housing 610 about a corresponding axis of that roller 614 that is parallel to the axis 530. In the example provided, each roller 614 is a cylindrical body disposed longitudinally parallel to the axis 530. The rollers 614 permit the first tool engagement portion 150 (FIGS. 1-3) to be received in the bore 910 but rotation of the socket housing 610 causes the rollers 614 to become locked between the socket housing 610 and the first tool engagement portion 150 (FIGS. 1-3) to impart torque to the bolt 14 (FIGS. 1-3).

Referring to FIG. 9, the ejector pin 722 can be disposed concentrically within a bore 918 of the drive member 718 that is concentric with and open to the bore 762. The first spring 726 can be disposed within the bore 918 axially between the input member 738 and the ejector pin 722 and configured to bias the ejector pin 722 forward in the bore 918. A forward end 922 of the ejector pin 722 can extend into the bore 910 of the socket housing 610. In the example provided, a spacer 924 is disposed within the drive member 718 and blocks a rear end 926 of the ejector pin 722 from exiting the bore 918.

Referring to FIG. 10, the collet 710 includes a collet sleeve 1010 and a plurality of fingers or prongs 1014. The collet sleeve 1010 is disposed about the axis 530. In the example provided, the collet sleeve 1010 includes a pair of cam slots 1018 (one of which is shown in FIG. 10) through an outer cylindrical surface 1022 of the collet sleeve 1010. The cam slot 1018 extends longitudinally at an angle relative to the axis 530. Each prong 1014 extends from a forward end of the collet sleeve 1010. A forward end of each prong 1014 includes a jaw 1026 that extends radially inward. The jaws 1026 cooperate to define an aperture 1030 that can include a plurality of grip features 1034 (e.g., splines) configured to mate with the second tool engagement portion 266 (FIGS. 1-3) of the nut 18.

Referring to FIG. 8, the collet sleeve 1010 is coupled to the forward end of the annular body 730 for common rotation about the axis 530. In the example provided, the collet sleeve 1010 is threadably coupled to the annular body 730 though other configurations can be used. Each prong 1014 includes a ramp surface 810 that narrows radially inward in the rearward direction. In the example provided, the ramp surfaces 810 are proximate the jaws 1026 and at the junction of the jaws 1026 and the prongs 1014.

The outer sleeve 742 is disposed about the collet 710. The outer sleeve 742 includes a mating ramp surface 814 that is configured to slide along the ramp surfaces 810 of the prongs 1014. The outer sleeve 742 is axially slidable relative to the collet 710 such that when the outer sleeve 742 is in a forward position, the mating ramp surface 814 presses radially inward on the ramp surfaces 810 to press the jaws 1026 radially inward relative to when the outer sleeve 742 is in a retracted or rearward position. In the example provided, the third spring 746 biases the outer sleeve 742 toward the forward position.

In the example provided, follower lugs 818 or (e.g., set screws) can extend radially inward from the outer sleeve 742 into the cam slots 1018. The follower lugs 818 are configured to ride along the cam slots 1018 such that when the collet 710 rotates about the axis 530, the outer sleeve 742 rotates therewith but applying a rotational drag force on the outer sleeve 742 can cause the follower lugs 818 to ride rearward in the cam slots 1018 to move the outer sleeve 742 axially rearward. In one form, the rotational drag may be caused by an operator. In another form, the tool 510 may optionally include a rotational brake 554 (FIG. 5) to cause the rotational drag. In the example provided, the rotational brake 554 is located in the rear nose portion 534 (FIG. 5), though other configurations can be used.

Referring to FIG. 14, the blind fastener 10 is loaded into the nose 514 of the tool such that the first tool engagement portion 150 is received in the socket assembly 714 and the second tool engagement portion 266 is gripped by the jaws 1026. The blind fastener 10 is inserted into the workpieces 26, 30 either before loading into the tool 510 or after. The tool 510 is then pressed forward until in the position shown in FIG. 14. Pressing the tool 510 causes the collet 710 to move rearward relative to the rear nose portion 534 so that the stop members 1130 engage the stop members 550 to inhibit rotation of the collet 710. The outer sleeve 742 remains forward relative to the collet 710 so the jaws 1026 continue to grip the second tool engagement portion 266. The drive member 718 is forward relative to the collet 710 such that the mode clutch input 1110 is not engaged with the mode clutch output 1126. The driver 518 is then operated to rotate the drive member 718 to rotate the bolt 14. The bolt 14 is rotated until the bulb 410 (FIG. 4) is formed and then the lug 118 breaks off.

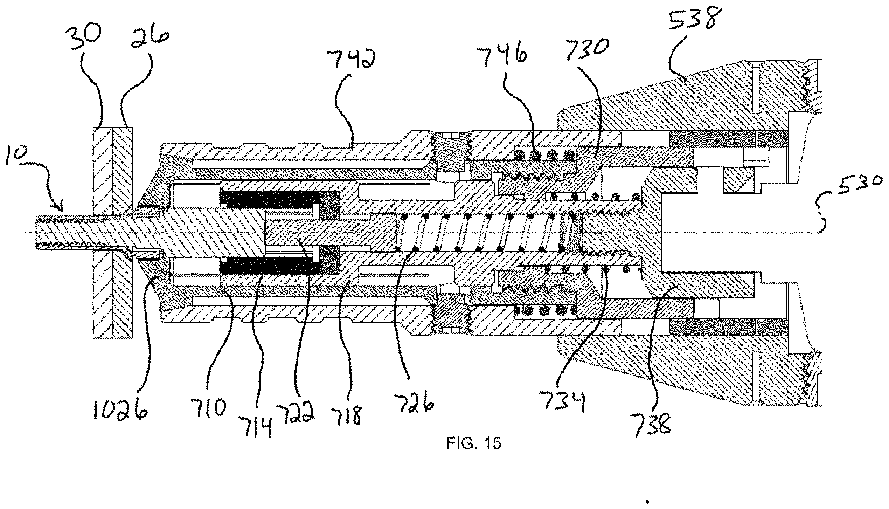

Next, the tool 510 can be slightly retracted so that the tool is generally in the position shown in FIG. 15. In this position, the outer sleeve 742 is in the forward position so that the jaws 1026 continue to grip the second tool engagement portion 266. The collet 710 is in the forward position such that the annular body 730 is not engaged with the stop members 550. The drive member 718 is in the rearward position such that it is engaged for rotation with the annular body 730. The driver 518 is operated so that the drive member 718 and the collet 710 rotate until the handling member 218 breaks off. The second tool engagement portion 266 is still gripped by the jaws 1026 and the lug 118 is retained in the tool 510 by the handling member 218.

The tool 510 can then be moved to a location away from the workpieces 26, 30 and the outer sleeve 742 can be moved rearward (either directly or via the rotational brake 554 schematically shown in FIG. 5). This permits the jaws 1026 to expand radially outward, releasing the handling member 218. The ejector pin 722 is pressed forward by the first spring 726 and ejects the lug 118 from the tool 510, which can also eject the handling member 218 from the tool 510. In the example provided, the third spring 746 is stiffer than the second spring 734 such that when the outer sleeve 742 is pulled back, the stop members 1130 engage the stop members 550 before the collet 710 opens.

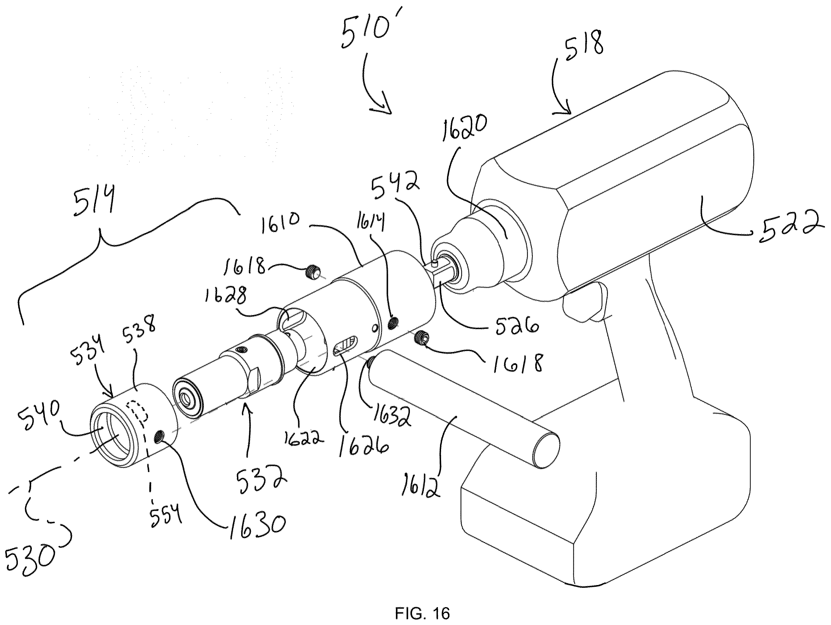

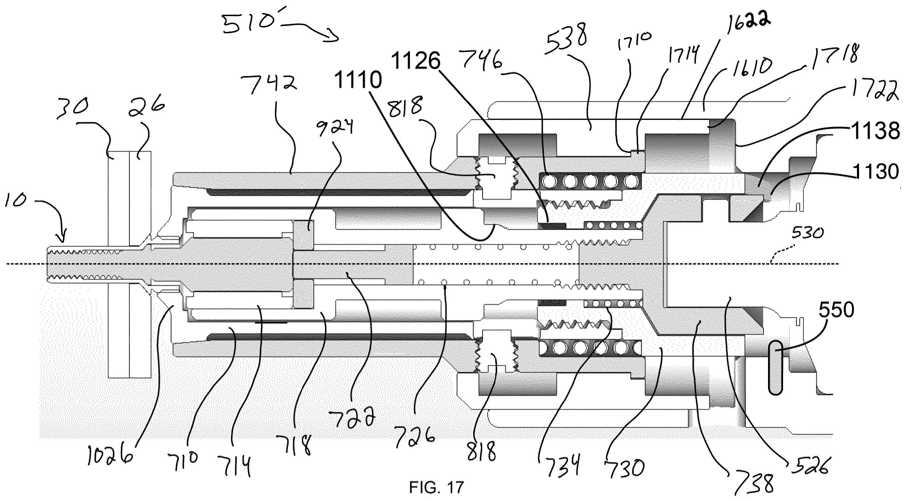

Referring to FIGS. 16 and 17, a tool 510' of a second configuration is illustrated. The tool 510' is similar to the tool 510 (FIGS. 5-15) except as otherwise shown or described herein. Accordingly, similar features are denoted by similar reference numerals and only differences are described in detail herein. In the example provided, the driver 518 also includes a shroud 1610 and a reaction bar 1612, also referred to herein as a handle. The shroud 1610 is a generally cylindrical body disposed about the axis 530 and fixed to the housing 522. In the example provided, the shroud 1610 defines a pair of threaded apertures 1614 (one of which is visible in FIG. 16) and a corresponding set screw 1618 is threadably received into each aperture 1614 to engage a nose portion 1620 of the driver 518 to inhibit movement of the shroud 1610 relative to the housing 522, though other configurations can be used such as welding, clips, or other types of fasteners for example. In the example provided, the shroud 1610 defines a central bore 1622 concentric about the axis 530 and extending axially through the shroud 1610 and a slot 1626 extending through a sidewall of the shroud 1610 and open to the central bore 1622.

In the example provided, the rear nose portion 534 is slidably received in the central bore 1622 and defines a threaded bore 1630 through a side wall of the cylindrical body 538 that aligns with the slot 1626. An end 1632 of the reaction bar 1612 extends through the slot 1626 and threadably engages the bore 1630. The slot 1626 inhibits rotation of the reaction bar 1612 but permits axial translation within the slot 1626. In the example provided, the shroud 1610 can optionally define a second slot 1628 on the opposite side and the cylindrical body 538 can define a second threaded bore (not visible in FIG. 16) on the opposite side to permit the reaction bar 1612 to be switched to the other side.

In the example provided, the cylindrical body 538 defines a shoulder 1710 and the outer sleeve 742 defines a lip 1714 configured to engage the shoulder 1710 to inhibit the outer sleeve 742 from translating axially outward from the cylindrical body 538 beyond the position shown in FIG. 17. In the example provided, the shoulder 1710 and lip 1714 extend circumferentially about the axis 530, though other configurations can be used. In the position shown in FIG. 17, a rear end 1718 of the cylindrical body 538 is spaced apart from a shoulder 1722 of the shroud 1610 such that the reaction bar 1612 can be pulled axially backwards (i.e., toward the housing 522) in the slot 1626 to translate the cylindrical body 538 and thus the outer sleeve 742 backwards. Thus, an operator can release the collet 710 by pulling the reaction bar 1612. Furthermore, in the example provided, the stop members 550 (one of which is shown in FIG. 17) extend radially inward from the shroud 1610, though other configurations can be used.

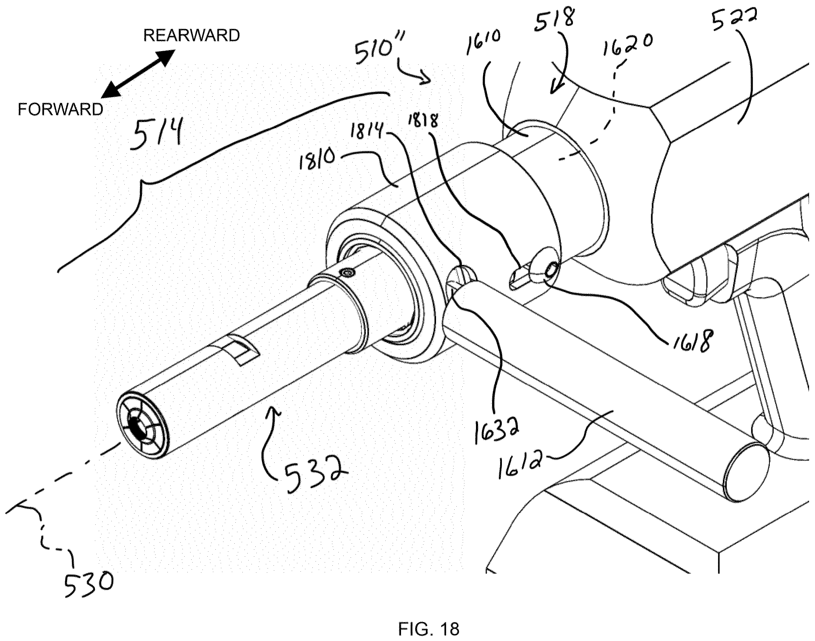

Referring to FIGS. 18-25, a tool 510" of a third configuration is illustrated. The tool 510" is similar to the tool 510 (FIGS. 5-15) and 510' (FIGS. 16 and 17) except as otherwise shown or described herein. Accordingly, similar features are denoted by similar reference numerals and only differences are described in detail herein.

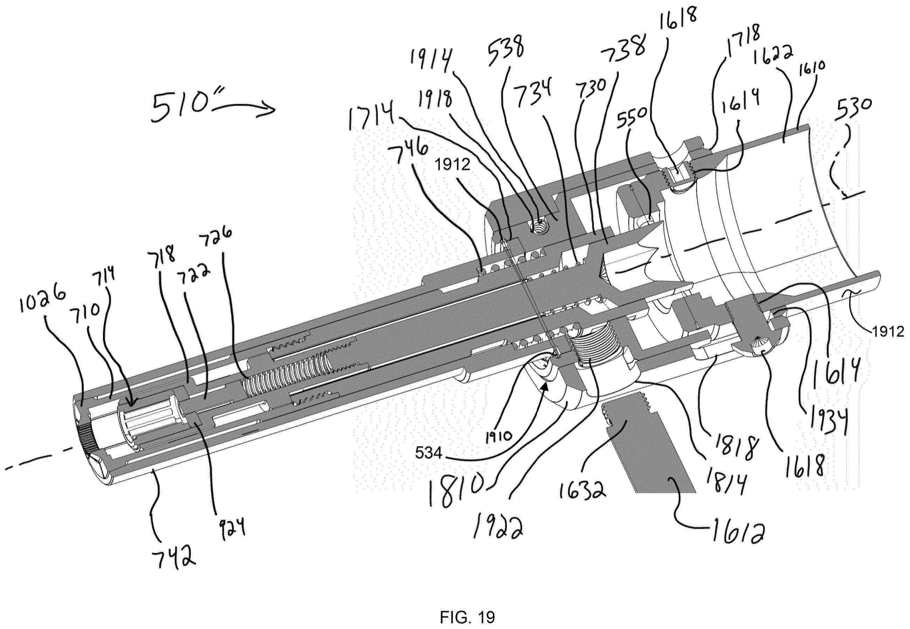

In the example provided, the shroud 1610 does not define the slot 1626. In the example provided, the stop members 550 (one of which is shown in FIG. 19) extends radially inward from the shroud 1610. In the example provided, the rear end 1718 of the cylindrical body 538 is disposed about the shroud 1610 and is slidable along an outer surface 1912 of the shroud 1610 axially and rotationally with reference to the axis 530.

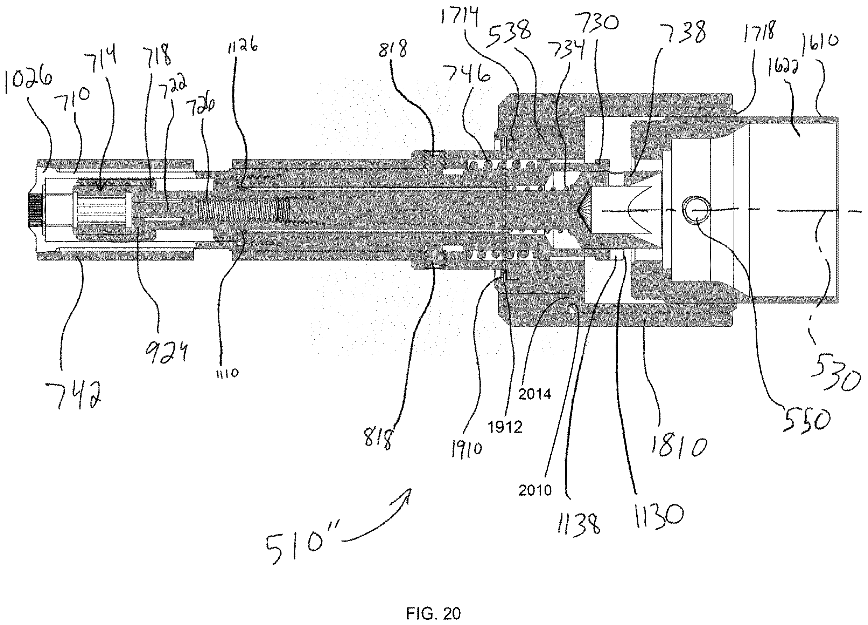

In the example provided, the rear nose portion 534 also includes an outer shroud 1810 disposed concentrically about the cylindrical body 538. The outer shroud 1810 defines a rear facing shoulder 2010 (labeled in FIG. 20) configured to abut a forward facing lip 2014 (labeled in FIG. 20) of the cylindrical body 538. The cylindrical body 538 is rotatable about the axis 530 relative to the outer shroud 1810.

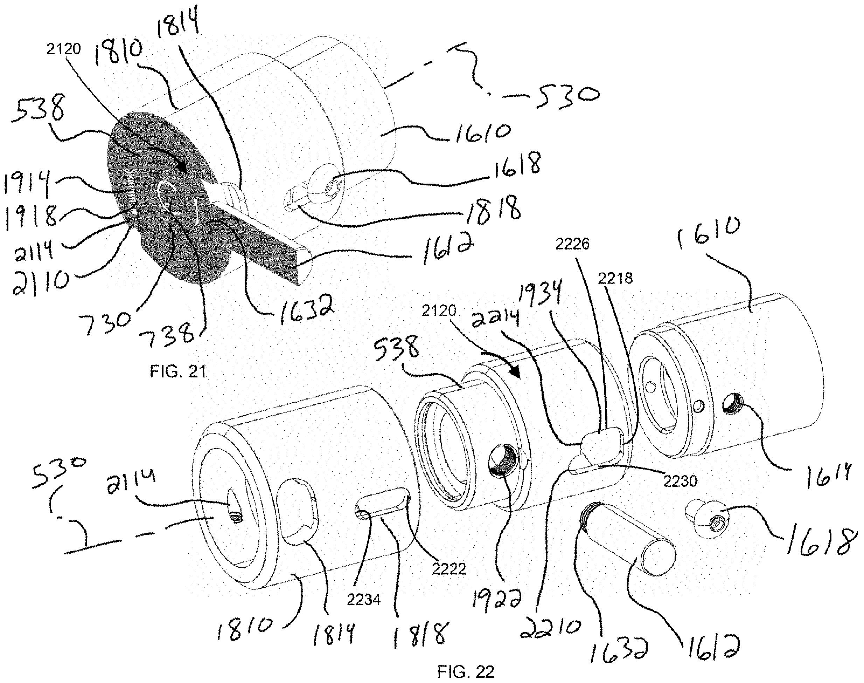

Referring to FIGS. 21 and 22, the outer shroud 1810 defines a first slot 1814 extending radially through one side of the outer shroud 1810. The first slot 1814 extends longitudinally in the circumferential direction about the axis 530. The outer shroud 1810 also defines a second slot 1818 extending radially through one side of the outer shroud 1810. In the example provided, the first and second slots 1814 and 1818 are on the same side of the outer shroud 1810, though other configurations can be used. The second slot 1818 is axially rearward of the first slot 1814 and extends longitudinally in the axial direction.

As best shown in FIG. 21, the outer shroud 1810 can also define a bore 2114 extending through a side of the outer shroud 1810 and aligned with a bore 1918 defined tangentially in a side of the cylindrical body 538. A spring 1914 is disposed within the bore 1918 and a plug 2110 is disposed within the bore 2114 to maintain the spring in the bore 1918. In the example provided, the plug 2110 is threadably engaged with the bore 2114, though other configurations can be used. The spring 1914 is configured to bias the cylindrical body 538 rotationally relative to the outer shroud 1810 in the rotational direction 2120.

Referring to FIGS. 21 and 22, the end 1632 of the reaction bar 1612 extends through the first slot 1814 and is coupled to the cylindrical body 538. In the example provided the end 1632 is threaded and received in a threaded bore 1922 defined by the cylindrical body 538, though other configurations can be used. The cylindrical body 538 defines an aperture 1934 that extends radially through a side of the cylindrical body 538. The aperture 1934 is delimited in the rearward direction by a rear surface 2218. A first region of the aperture 1934 is delimited in the forward direction by a first forward surface 2210 and a second region of the aperture 1934 is delimited in the forward direction by a second forward surface 2214. The first forward surface 2210 is further in the axial direction from the rear surface 2218 than the second forward surface 2214. The first forward surface 2210 is further in the rotational direction 2120 than the second forward surface 2214. The aperture 2210 generally aligns with the slot 1818. One of the set screws 1618 extends through the slot 1818 and through the aperture 2210 and is threadably engaged with the threaded aperture 1614 to act as a limit pin that limits movement of the cylindrical body 538 and outer shroud 1810 relative to the shroud 1610.

Referring to FIGS. 19 and 20, the cylindrical body 538 may also define a circumferential groove 1912 that is open radially inward. A retainer 1910 (e.g., a resilient snap ring or C-clip) is received in the groove 1912 and extends radially inward therefrom to block the lip 1714 of the outer sleeve 742 to inhibit relative axial motion between the outer sleeve 742 and the cylindrical body 538.

Referring the FIGS. 18-20, when the tool 510" is at rest, the second spring 734 can the annular body 730 forward relative to the drive member 718 and into the position in which the mode clutch input 1110 is engaged. In this position, the third spring 746 biases the outer sleeve 742 into the forward position. Since the cylindrical body 538 is coupled to the outer sleeve 742 for axial movement therewith via the retainer 1910, the cylindrical body 538 and the reaction bar 1612 are also in a forward position relative to the shroud 1610. In this forward position, the set screw 1618 engages the rear surface 2218 (labeled in FIG. 22) of the aperture 1934 and a rear surface 2222 (labeled in FIG. 22) of the slot 1818. In this position, spring 1914 biases the cylindrical body in the rotational direction 2120 (labeled in FIGS. 21 and 22) so that the reaction bar 1612 is toward the bottom of the first slot 1814. In this position, the set screw 1618 can engage a top surface 2226 (labeled in FIG. 22).

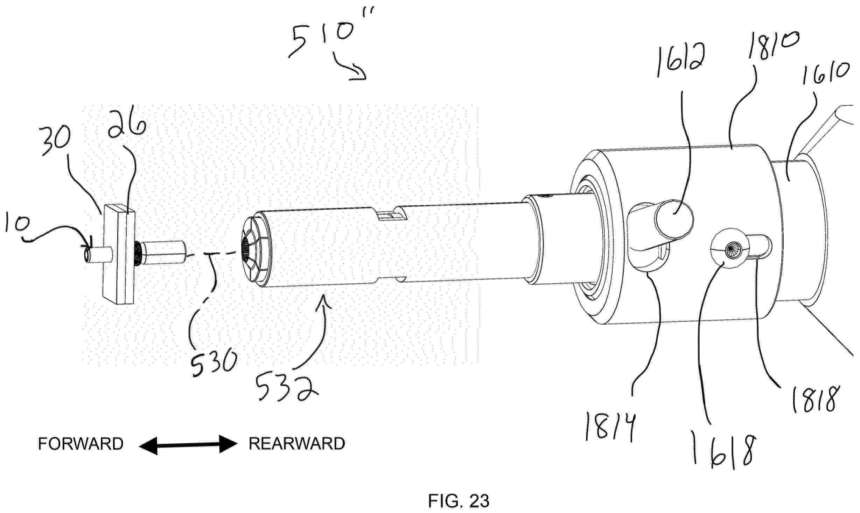

Referring to FIG. 23, when installation of the blind fastener 10 is to be done, the reaction bar 1612 is rotated in the rotational direction opposite direction 2120 (labeled in FIGS. 21 and 22) until the set screw 1618 engages a bottom surface 2230 (FIG. 22) of the aperture 1934 and is then translated rearward until the set screw 1618 engages the first forward surface 2210. In this position, the reaction bar 1612 can be located toward a top of the first slot 1814. In this position, the set screw 1618 may engage a front surface 2234 (labeled in FIG. 22) of the slot 1818. In this position, the outer sleeve 742 is rearward and the jaws 1026 are expanded. The tool 510" is then moved forward until the first tool engagement portion 150 (labeled in FIG. 2) and the second tool engagement portion 266 (labeled in FIG. 2) are received in the tool 510".

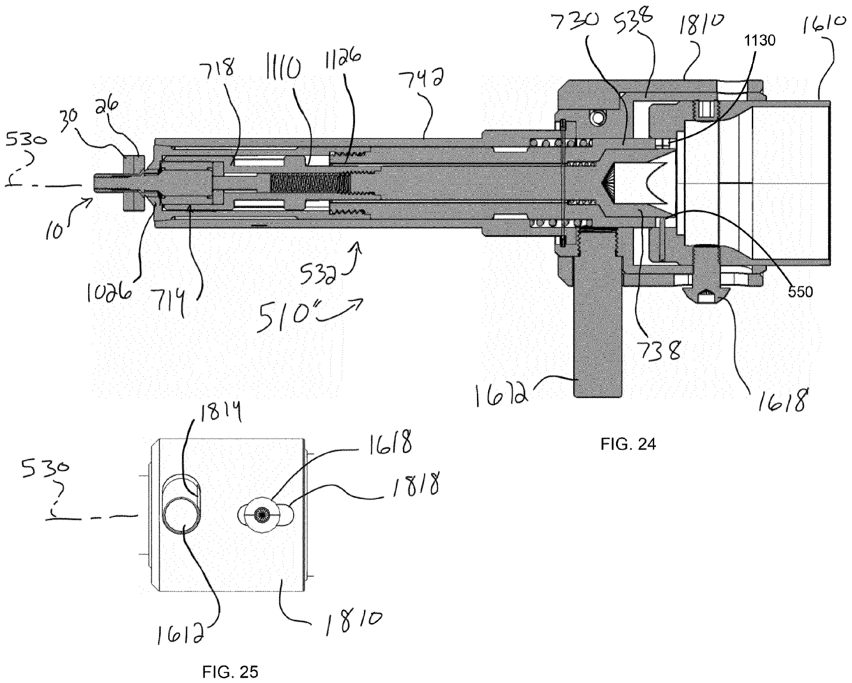

While the blind fastener 10 is illustrated in FIG. 23 as already positioned in the workpieces 26, 30, the blind fastener 10 may alternatively be first inserted into the tool 510" with the tool 510" in the position shown in FIG. 23 and then retained in the tool 510" by moving the reaction bar 1612 to the position shown in FIGS. 24 and 25 and described below.

Referring to FIGS. 24 and 25, the reaction bar 1612 then translates axially to the position shown in FIGS. 24 and 25 and then rotates in the direction 2120 (labeled in FIG. 22) back toward the bottom of the slot 1814 so that the set screw 1618 engages the forward surface 2214 (FIG. 22) of the aperture 1924 (FIG. 22). In this position, the first tool engagement portion 150 (labeled in FIG. 2) and the second tool engagement portion 266 (labeled in FIG. 2) are engaged by the socket assembly 714 and the jaws 1026, respectively. In this position, the mode clutch 1110 is disengaged so that the socket 714 can rotate relative to the jaws 1026. In this position, the stop members 1130 engage the stop members 550 to inhibit rotation of the jaws 1026. In this position, the socket 714 can be rotated by the driver 518 (FIG. 18) until the first tool engagement portion 150 (labeled in FIG. 2) breaks off.

Next and with reference to FIGS. 18 and 19, the driver 518 can be translated rearward slightly until the set screw 1618 is again in the position shown in FIGS. 18-21. In this position, the stop members 1130 are disengaged from the stop members 550, the mode clutch 1110 is engaged so that the socket 714 rotates with the jaws 1026, and the outer sleeve 742 remains forward to maintain the jaws 1026 in gripping position with the second tool engagement portion 266 (FIG. 2). In this position, the driver 518 can be operated to rotate the second tool engagement portion 266 (FIG. 2) until it breaks off.

The tool 510" can then be moved away from the installed blind fastener 10 and panels 26, 30 to release the broken off first and second tool engagement portions 150, 266. To release the broken off first and second tool engagement portions 150, 266, the reaction bar 1612 is moved again to the position shown in FIG. 23 and the spring 726 pushes the ejector pin 722 to eject the broken off first and second tool engagement portions 150, 266. Thus, the tool 510" can attach the blind fastener 10 to the workpieces 26, 30, retain the broken off components, and release them at to safe location to avoid the broken off components from impacting or damaging the workpieces 26, 30 or other components (not shown) nearby.

Additionally, any one of the tools 510, 510', or 510" can be used with a driver 518 that can optionally be an electric smart driver, capable of tracking and storing installation data, which can be integrated into a smart tool communication system and provide installation data for every part installed.

According to an aspect of the present disclosure, a blind fastener for connecting a plurality of workpieces, comprises:
a bolt including a shaft, a bolt head, and a lug, the bolt head being disposed between the shaft and the lug and extending radially outward from the shaft, an end of the shaft opposite the bolt head defining external threads, the lug including a first tool engagement portion and a first frangible portion that frangibly couples the lug to the bolt head, the first tool engagement portion defining a cylindrical outer surface configured to be engaged by a tool; and
a nut including a sleeve, a nut head, and a handling member, the sleeve defining a central bore configured to receive the shaft and defining internal threads configured to mate with the external threads, the nut head being disposed between the handling member and the sleeve, the nut head extending radially outward from the sleeve and defining a recess configured to receive the bolt head, the handling member being configured to surround at least a portion of the lug, the handling member including a second frangible portion and a second tool engagement portion, the second frangible portion frangibly coupling the second tool engagement portion to the nut head.

In some examples, an end surface of the bolt head may be flush with or recessed from an end surface of the nut head when the bolt is fully threaded into the nut.

In some examples, the first frangible portion may be configured to break off from the bolt head such that an end surface of the bolt head is flush with or recessed from a front surface of the plurality of workpieces, and the second frangible portion may be configured to break off from the nut head such that an end surface of the nut head is flush with or recessed from the front surface.

In some examples, the lug may taper radially inward from the cylindrical outer surface to a terminal end portion of the bolt.

In some examples, the handling member may taper radially inward from the second tool engagement portion to a terminal end portion of the nut.

In some examples the second frangible portion may be entirely radially inward of an outermost perimeter of the nut head.

In some examples, the handling member may define a bore having a diameter equal to an outermost diameter of the recess.

In some examples, a radially outermost surface of the lug may be disposed radially outward of a bore defined by the handling member, the first frangible portion extending through the bore.

In some examples, the handling member may be entirely radially outward of the first tool engagement portion.

In some examples, the lug may taper radially inward from the cylindrical outer surface to the first frangible portion.

In some examples, the blind fastener may consist of two pieces when in a pre-installed condition, the bolt being a first one of the two pieces and the nut being a second one of the two pieces.

In some examples, the second frangible portion may define a break-neck that extends around a full circumference of the nut.

In some examples, the first frangible portion may include a break-neck that extends around a full circumference of the bolt.

In some examples, the bolt may be an aluminum material and the sleeve may be a titanium material.

In some examples, the bolt may be a 6-4 titanium alloy material and the sleeve may be an unalloyed commercially pure titanium material.

According to an aspect of the present disclosure, it is further disclosed a tool for installing a blind fastener (10) including a bolt (14) and a nut (18) according to any one of the following clauses.

Clause 1. A tool (510, 510', 510") for installing a blind fastener (10) including a bolt (14) and a nut (18), the tool (510) comprises:
a collet (710) disposed about an axis (530), the collet (710) being configured to selectively engage a tool engagement portion (266) of the nut (18);
a socket assembly (714) including a socket housing (610) and a plurality of rollers (614), the socket housing (610) being rotatable relative to the collet (710) and defining a bore disposed about the axis (530), the rollers (614) being spaced circumferentially about the axis (530), a surface of each roller (614) being configured to engage a cylindrical tool engagement portion (150) of the bolt (14) within the bore to rotate the bolt (14) about the axis (530);
a drive body (718) coupled to the socket housing (610) and configured to rotate the socket housing (610) about the axis (530); and
a mode clutch operable in an engaged mode in which the socket housing (610) is coupled to the collet (710) for common rotation about the axis (530) and a disengaged mode in which the socket housing (610) is rotatable relative to the collet (710).

Clause 2. The tool (510, 510', 510") according to Clause 1, wherein the rollers (614) are cylindrical and oriented parallel to the axis (530).

Clause 3. The tool (510, 510', 510") according to Clause 1 or 2 further comprising an outer sleeve (742) disposed about the collet (710), wherein the collet (710) includes a plurality of prongs (1014) extending radially inward and configured to engage the tool engagement portion (266) of the nut (18), the outer sleeve (742) being movable between an engagement sleeve position and a release sleeve position, wherein when the outer sleeve (742) is in the engagement sleeve position, the outer sleeve (742) positions the prongs (266) further radially inward than when in the release sleeve position.

Clause 4. The tool (510, 510', 510") according to Clause 3, wherein the outer sleeve (742) is biased toward the engagement sleeve position.

Clause 5. The tool (510', 510") according to Clause 3 or 4 further comprising:
a cylindrical body (538) disposed about the axis (530) and defining an aperture (1934) having a first region and a second region, the first region extending axially further forward than the second region, the cylindrical body (538) being coupled to the outer sleeve (742) for axial movement therewith;
a limit pin (1618) extending through the aperture (1934); and
a reaction bar (1612) coupled to the cylindrical body (538), the reaction bar (1612) configured to rotate the cylindrical body (538) about the axis (530) between a first rotational position and a second rotational position and to translate the cylindrical body (538) axially,
wherein when the cylindrical body (538) is in the first rotational position, the limit pin (1618) is disposed in the first region of the aperture (1934) that permits the cylindrical body (538) to move the outer sleeve (742) axially to the release sleeve position, and when the cylindrical body (538) is in the second rotational position, the limit pin (1618) is disposed in the second region of the aperture (1934) that inhibits the cylindrical body (538) from moving the outer sleeve (742) axially to the release sleeve position.

Clause 6. The tool (510") according to Clause 5 further comprising an outer shroud (1810) disposed about the cylindrical body (538) and defining a first slot (1814) and a second slot (1818), wherein the reaction bar (1612) extends through the first slot (1814) and the limit pin (1618) extends through the second slot (1818).

Clause 7. The tool (510") according to Clause 6, wherein the cylindrical body (538) is rotatable about the axis (530) relative to the outer shroud (1810) and is coupled for axial translation with the outer shroud (1810).

Clause 8. The tool (510") according to any one of Clauses 5 to 7, further comprising a spring (1914) that biases the cylindrical body (538) toward the second rotational position.

Clause 9. The tool (510, 510', 510") according to any one of Clauses 3 to 8, wherein the collet (710) includes a collet sleeve (1010), the prongs (1014) extending axially from the collet sleeve (1010) and the outer sleeve (742) being disposed about the collet sleeve (1010), wherein one of the collet sleeve (1010) and the outer sleeve (742) defines a cam surface (1018) and the other one of the collet sleeve (1010) and the outer sleeve (742) defines a follower (818), the cam surface (1018) extending at an angle relative to the axis (530).

Clause 10. The tool (510, 510', 510") according to any one of Clauses 1 to 9, wherein the mode clutch includes an input member (1110) coupled to the drive member (718) for common rotation about the axis (530) and an output member (1126) coupled to the collet (710) for common rotation about the axis (530), the output member (1126) being disposed about the input member (1110) and axially movable relative to the input member (1110) between a first mode clutch position and a second mode clutch position, wherein in the first mode clutch position, the input member (1110) is engaged with the output member (1126) for common rotation about the axis (530), and when in the second mode clutch position, the input member (1110) is rotatable relative to the output member (1126).

Clause 11. The tool (510, 510', 510") according to Clause 10 further comprising a stop member (550) fixed relative to a housing (522) of a driver (518) that is configured to rotate the drive body (718) relative to the housing (522) of the driver (518), wherein the output member (1126) includes a mating stop member (1130), wherein when in the second mode clutch position, the stop member (550) engages the mating stop member (1130) to inhibit rotation of the output member (1126) relative to the housing (522) of the driver (518), and when in the first mode clutch position, the stop member (550) and mating stop member (1130) are disengaged to permit rotation of the output member (1126) relative to the housing (522) of the driver (518).

Clause 12. The tool (510, 510', 510") according to Clause 10 or 11, wherein the output member (1126) is biased toward the first mode clutch position.

Clause 13. The tool (510, 510', 510") according to any one of Clause 1 to 12, further comprising an ejector pin (722) configured to selectively eject the bolt (14) from the socket housing (610).

It should be noted that the disclosure is not limited to the form described and illustrated as examples. A large variety of modifications have been described and more are part of the knowledge of the person skilled in the art. These and further modifications as well as any replacement by technical equivalents may be added to the description and figures, without leaving the scope of the protection of the disclosure and of the present patent.

As used herein, the phrase at least one of A, B, and C should be construed to mean a logical (A OR B OR C), using a non-exclusive logical OR, and should not be construed to mean "at least one of A, at least one of B, and at least one of C.

Unless otherwise expressly indicated, all numerical values indicating mechanical/thermal properties, compositional percentages, dimensions and/or tolerances, or other characteristics are to be understood as modified by the word "about" or "approximately" in describing the scope of the present disclosure. This modification is desired for various reasons including industrial practice, manufacturing technology, and testing capability.

The terminology used herein is for the purpose of describing particular example forms only and is not intended to be limiting. The singular forms "a," "an," and "the" may be intended to include the plural forms as well, unless the context clearly indicates otherwise. The terms "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

The description of the disclosure is merely exemplary in nature and, thus, examples that do not depart from the substance of the disclosure are intended to be within the scope of the disclosure. Such examples are not to be regarded as a departure from the spirit and scope of the disclosure. The broad teachings of the disclosure can be implemented in a variety of forms. Therefore, while this disclosure includes particular examples, the true scope of the disclosure should not be so limited since other modifications will become apparent upon a study of the drawings, the specification, and the following claims.

## Claims

1. A blind fastener for connecting a plurality of workpieces, comprising:
a bolt including a shaft, a bolt head, and a lug, the bolt head being disposed between the shaft and the lug and extending radially outward from the shaft, an end of the shaft opposite the bolt head defining external threads, the lug including a first tool engagement portion and a first frangible portion that frangibly couples the lug to the bolt head, the first tool engagement portion defining a cylindrical outer surface configured to be engaged by a tool; and
a nut including a sleeve, a nut head, and a handling member, the sleeve defining a central bore configured to receive the shaft and defining internal threads configured to mate with the external threads, the nut head being disposed between the handling member and the sleeve, the nut head extending radially outward from the sleeve and defining a recess configured to receive the bolt head, the handling member being configured to surround at least a portion of the lug, the handling member including a second frangible portion and a second tool engagement portion, the second frangible portion frangibly coupling the second tool engagement portion to the nut head.

2. A blind fastener according to claim 1, **characterized in that** an end surface of the bolt head is flush with or recessed from an end surface of the nut head when the bolt is fully threaded into the nut.

3. A blind fastener according to claim 1, **characterized in that** the first frangible portion is configured to break off from the bolt head such that an end surface of the bolt head is flush with or recessed from a front surface of the plurality of workpieces, and the second frangible portion may be configured to break off from the nut head such that an end surface of the nut head is flush with or recessed from the front surface.

4. A blind fastener according to claim 1, **characterized in that** the lug tapers radially inward from the cylindrical outer surface to a terminal end portion of the bolt.

5. A blind fastener according to claim 1, **characterized in that** the handling member tapers radially inward from the second tool engagement portion to a terminal end portion of the nut.

6. A blind fastener according to claim 1, **characterized in that** the second frangible portion is entirely radially inward of an outermost perimeter of the nut head.

7. A blind fastener according to claim 1, **characterized in that** the handling member defines a bore having a diameter equal to an outermost diameter of the recess.

8. A blind fastener according to claim 1, **characterized in that** a radially outermost surface of the lug is disposed radially outward of a bore defined by the handling member, the first frangible portion extending through the bore.

9. A blind fastener according to claim 1, **characterized in that** the handling member is entirely radially outward of the first tool engagement portion.

10. A blind fastener according to claim 1, **characterized in that** the lug tapers radially inward from the cylindrical outer surface to the first frangible portion.

11. A blind fastener according to claim 1, **characterized in that** the blind fastener consists of two pieces when in a pre-installed condition, the bolt being a first one of the two pieces and the nut being a second one of the two pieces.

12. A blind fastener according to claim 1, **characterized in that** the second frangible portion defines a break-neck that extends around a full circumference of the nut.

13. A blind fastener according to claim 1, **characterized in that** the first frangible portion includes a break-neck that extends around a full circumference of the bolt.

14. A blind fastener according to claim 1, **characterized in that** the bolt is an aluminum material and the sleeve is a titanium material.

15. A blind fastener according to claim 1, **characterized in that** the bolt is a 6-4 titanium alloy material and the sleeve is an unalloyed commercially pure titanium material.
